(19) Europäisches Patentamt
European Patent Office
Office européen des brevets

(11) EP 2 491 786 A1

(12) **EUROPEAN PATENT APPLICATION**
published in accordance with Art. 153(4) EPC

(43) Date of publication:
**29.08.2012 Bulletin 2012/35**

(21) Application number: **10824914.5**

(22) Date of filing: **19.10.2010**

(51) Int Cl.:
***A01N 47/40*** *(2006.01)* ***A01P 7/02*** *(2006.01)*

(86) International application number:
**PCT/JP2010/068325**

(87) International publication number:
**WO 2011/049065 (28.04.2011 Gazette 2011/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2009 JP 2009242399**

(71) Applicant: **Nippon Soda Co., Ltd.**
**Tokyo 100-8165 (JP)**

(72) Inventors:
- **ENDO Yoshihisa**
  **Makinohara-shi**
  **Shizuoka 421-0412 (JP)**
- **ITO Akihiko**
  **Makinohara-shi**
  **Shizuoka 421-0412 (JP)**
- **YAMAMOTO Atsushi**
  **Makinohara-shi**
  **Shizuoka 421-0412 (JP)**
- **SEINO Hiroyuki**
  **Makinohara-shi**
  **Shizuoka 421-0412 (JP)**

(74) Representative: **Carlisle, Julie et al**
**Mewburn Ellis LLP**
**33 Gutter Lane**
**London EC2V 8AS (GB)**

(54) **TICK CONTROL BAIT**

(57) A mite control bait-preparation containing, as an active ingredient, (E)-N1-[(6-chloro-3-pyridyl)methyl]-N2-cyano-N1-methylacetamidine, N,N' -[thiobis[(methylimino)carbonyloxy]]bis[ethaneimidethioic acid methyl ester], 2-(p-tert-butylphenoxy)cyclohexyl-2-propynyl sulfite, trans-5-(4-chlorophenyl)-N-cyclohexyl-4-methyl-2-oxothiazolidine-3-carboxamide, or the like, and a method for controlling mites are provided.

EP 2 491 786 A1

## Description

[Technical Field]

The present invention relates to a mite control bait-preparation and a method for controlling mites. Priority is claimed on Japanese Patent Application No. 2009-242399, filed October 21, 2009, the content of which is incorporated herein by reference.

[Background Art]

In recent years, damages caused by acarids such as Tyrophagus similis spreads in spinach production areas with rain shelters, and the spread of damages prevents promotion of production. The acarids propagate in soil and then damage the spinach, and it is quite difficult to control the acarids after the propagation thereof in soil.
Accordingly, it is desired to develop control techniques to suppress the propagation of the acarids in soil.
Patent document 1 discloses an aqueous bait-preparation for pest control, the aqueous bait-preparation containing: 0.0001 to 0.1% by weight of a neonicotinoid compound represented by formula (1), formula (2), or formula (3); and 90 to 99.9999% by weight of water.
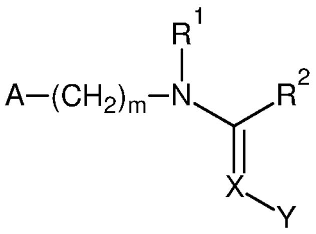

(1)

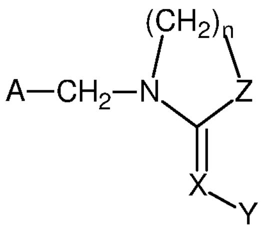

(2)

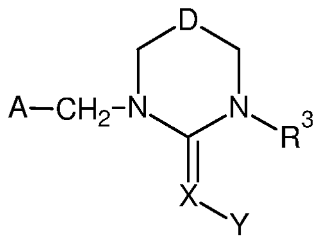

(3)

(In formula (1), formula (2), and formula (3), A represents a tetrahydrofuran-2-yl group, a 6-chloro-3-pyridyl group, or the like, $R^1$ represents a hydrogen atom, a methyl group, or the like, $R^2$ represents a methylamino group, or the like, $R^3$ represents a methyl group, or the like, X represents a nitrogen atom or a CH group, Y represents a cyano group, a nitro group, or the like, Z represents an NH group or a sulfur atom, m represents 0 or 1, and n represents 2 or 3.)
The bait-preparation can control pests such as: Blattodea such as Periplaneta Americana, Blattela germanica, or Periplaneta fuliginosa; Formicidae such as Monomorium intrudens, or Japanese wood ants; Anobiidae such as Lasioderma serricone, or Stegobium paniceum; Tribolium such as Tribolium castaneum, or Tribolium confusum; Cucujidae such as Oryzaephilus surinamensis, or Cryptolestes pusillus; Isopterous such as Coptotermes formosanus, or Reticulitermes speratus; Diptera such as Musca domestica, Fannia canicularis, Phoridae, or Psychodidae; or Culicidae such as Culex pipiens pallens, Aedes albopictus, Anopheles, or Chironomidae.
However, a less number of agents for suppressing propagation of acarids have been proposed, and, in particular, no bait-preparation for controlling acarids has been proposed as far as the inventors know.

[Citation List]

[Patent Documents]

[Patent Document 1] Japanese Unexamined Patent Application, First Publication No. 2000-53505

[Summary of Invention]

[Technical Problem]

An object of the present invention is to provide a mite control bait-preparation which exhibits excellent miticide effects and a method for controlling mites effectively.

[Solution to Problem]

The inventors of the present invention have conducted studies from various stundpoints in order to solve the above problems.

(E)-N1-[(6-chloro-3-pyridyl)methyl]-N2-cyano-N1-methylacetamidine is a compound represented by formula (I). Another name it is known by is acetamiprid. The compound is: commercially available under a trade name of MOSPILAN in a formulation of wettable powder, aqueous solution, granule, dust, aerosol, or compound fertilizer; and usually used as an insecticide. The acetamiprid is used to control cabbage moth, cabbage worm, aphid, thrips, or the like.

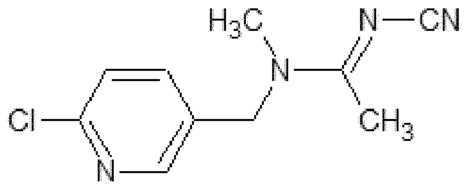

(I)

N,N'-[thiobis[(methylimino)carbonyloxy]]bis[ethaneimidethionic acid methyl ester] is a compound represented by formula (II). Another name it is known by is thiodicarb. The compound is usually used as an insecticide in a formulation of wettable powder or dust. The thiodicarb is used to control leaf rollers or insect borers in orchard trees or teas.
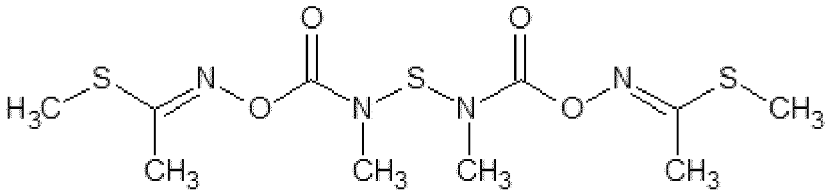

(II)

2,2-dichloroethenyl dimethyl phosphate is a compound represented by formula (III). Another name it is known by is dichlorvos. The compound is: commercially available under a trade name of PHOSVIT in an emulsion formulation; and usually used as a cholinesterase inhibitor, or a sanitary insecticide. The dichlorvos is used to control insects with a strong vital force, such as cockroach.
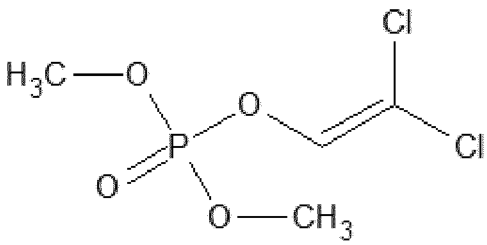

(III)

N-nitro-1-[(6-chloro-3-pyridinyl) methyl]-2-imidazolidineimine is a compound represented by formula (IV). Another name it is known by is imidacloprid. The compound is: commercially available under a trade name of ADMIRE in a formulation of wettable powder, water dispersible granule, or granule; and usually used as an insecticide. The imidacloprid is used to control Aphididae, Lyonetiidae, Bemisia tabaci, Thrips, or the like.
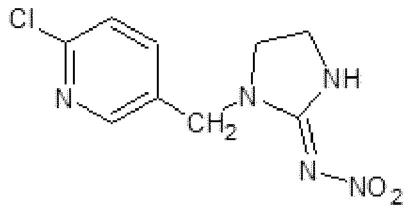

(IV)

N-cyano-3-[(6-chloro-3-pyridinyl)methyl]thiazolidine-2-imine is a compound represented by formula (v). Another name it is known by is thiacloprid. The compound is: commercially available under a trade name of BARIARD in a formulation of water dispersible granule or granule; and usually used as an insecticide. The thiacloprid is used to control Oulema oryzae, Lissorhoptrus oryzophilus, Nephotettix cincticeps, or the like.

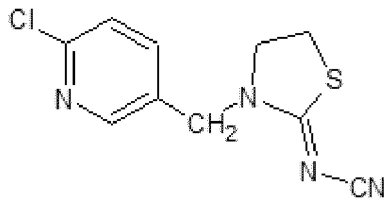

(V)

1-(2-chlorothiazol-5-yl) methyl-3-methyl-2-nitroguanidine is a compound represented by formula (VI). Another name it is known by is clothianidin. The compound is: commercially available under a trade name of DANTOTSU in a formulation of water-soluble powder, granule, or dust; and usually used as an insecticide. The clothianidin is used to control insect borers, Lyonetiidae, Hemiptera pests (such as Delphacidae, or Deltocephalidae), Thysanoptera, Coleoptera (Lissorhoptrus oryzophilus), Diptera (such as Agromyzidae), or the like.

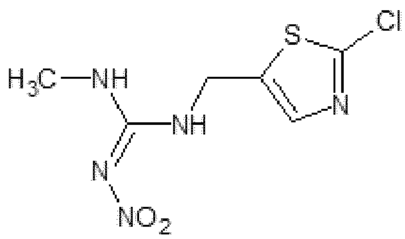

(VI)

N-nitro-3-(2-chlorothiazol-5-yl methyl)-5-methyl-3,4,5,6-tetrahydro-2H-1,3,5-oxadiazine-4-imine is a compound represented by formula (VII). Another name it is known by is thiametoxam. The compound is: commercially available under a trade name of ACTARA in a formulation of granule, water-soluble granule, or wettable powder; and usually used as an insecticide. The thiametoxam is used to control Delphacidae, Pseudococcidae, Diaphorina citri, Phyllocnistis citrella, Aphididae, Thrips palmi, Aleyrodidae, Agromyzidae, Thrips tabaci, Liriomyza chinensis, or the like.

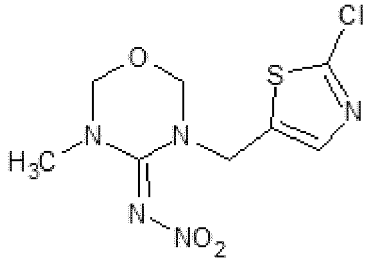

(VII)

Dimethyl (1-hydroxy-2,2,2-trichloroethyl) phosphonate is a compound represented by formula (VIII). Another name it is known by is trichlorfon. The compound is: commercially available under a trade name of DIPTEREX in a formulation of dust or emulsion; and usually used as an antiparasitic, a bactericidal agent, or an insecticide. The trichlorfon

is used to control Lernaea cyprinacea, Argulus japonicas, Gyrodactylus, Dactylogyrus, Argulus japonicas, Lernaea cyprinacea, or the like.

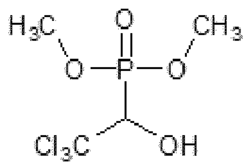

(VIII)

O,O-diethyl O-(5-phenyl-3-isoxazolyl) thiophosphate is a compound represented by formula (IX). Another name it is known by is isoxathion. The compound is: commercially available under a trade name of KARPHOS in a formulation of emulsion, dust, or granule; and usually used as an insecticide. The isoxathion is used to control Gryllidae, cutworms, Spodoptera litura, or the like.

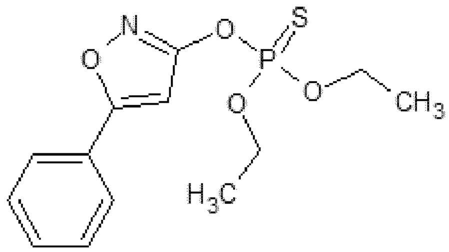

(IX)

Conventional agents containing compounds represented by formula (I) to formula (IX) exhibit excellent control-effects on insects such as aphid, but impractical control-effects on mites.

2-(p-tert-butylphenoxy) cyclohexyl 2-propynyl sulfite is a compound represented by formula (X). Another name it is known by is propargite. The compound is: commercially available under a trade name of OMITE in a formulation of wettable powder or emulsion; and usually used as a miticide.

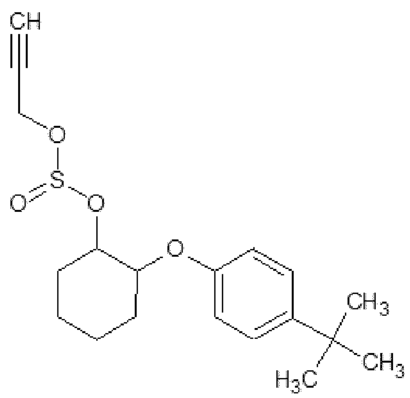

(X)

N-[[[4-[2-chloro-4-(trifluoromethyl)phenoxy]-2-fluorophenyl]amino] carbonyl]-2,6-difluorobenzamide is a compound represented by formula (XI). Another name it is known by is flufenoxuron. The compound is: commercially available under a trade name of CASCADE in a formulation of emulsion; and usually used as an insect growth regulator or a miticide.

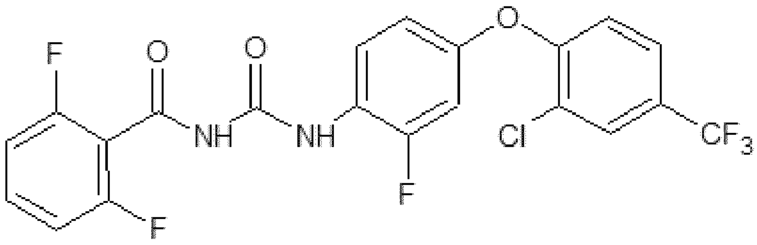

(XI)

4-bromo-1-(ethoxymethyl)-5-(trifluoromethyl)-2-(4-chlorophenyl)-1H-pyrrol-3-carbonitrile is a compound represented by formula (XII). Another name it is known by is chlorfenapyr. The compound is: commercially available under a trade name of KOTETSU in a flowable formulation; and usually used as a miticide.

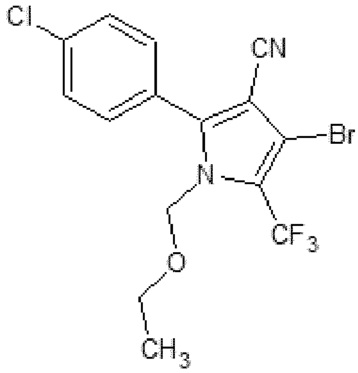

(XII)

(E)-2-(4-tert-butylphenyl)-2-cyano-1-(1,3,4-trimethyl-1H-pyrazol-5-yl) vinyl 2,2-dimethylpropanoate is a compound represented by formula (XIII). Another name it is known by is cyenopyrafen. The compound is: commercially available under a trade name of STARMITE in a formulation of flowable or wettable powder; and usually used as an insecticide. The cyenopyrafen is used to control spider mites.

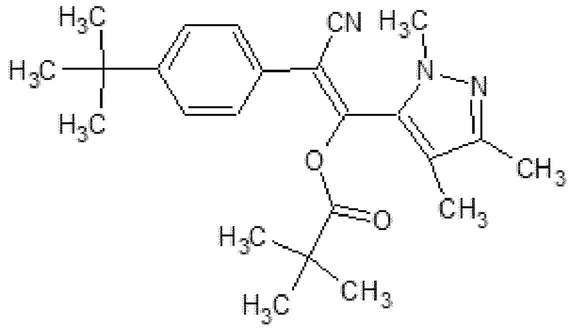

(XIII)

Trans-5-(4-chlorophenyl)-N-cyclohexyl-4-methyl-2-oxothiazolidine-3-carboxamide is a compound represented by formula (XIV). Another name it is known by is hexythiazox. The compound is: commercially available under a trade name of NISSORUN in a formulation of wettable powder or emulsion; and usually used as an insecticide / miticide.

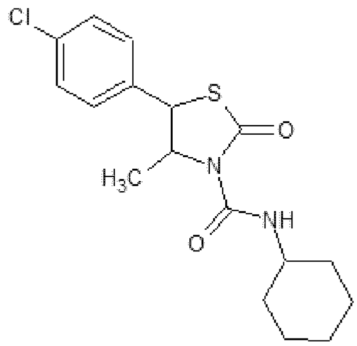

(XIV)

The compounds represented by the formulae (X) to (XIV) achieve control-effects on spider mites to some level, but does not achieve control-effects on acarids to a practical level.

The present inventors impregnated the compounds in bait to prepare bait-preparations, and orally administered the bait-preparations to mites. As a result, it was found that the bait-preparations obtained by impregnating the compounds in bait exhibited significantly excellent mite-control effects in comparison with agents obtained by formulating the compounds into a form of an emulsion, a wettable powder, an aqueous solution, a granule, a dust, an aerosol, a water-soluble granule, or a flowable. The present invention was completed by further study based on the findings.

The present invention includes the following aspects.

(1) A mite control bait-preparation containing, as an active ingredient, at least one compound selected from the group consisting of

(E)-N1-[(6-chloro-3-pyridyl)methyl]-N2-cyano-N1-methylacetamidine, N,N'-[thiobis[(methylimino)carbonyloxy]]bis[ethaneimidethioic acid methyl ester], 2,2-dichloroethenyl dimethyl phosphate, 2-(p-tert-butylphenoxy)cyclohexyl-2-propynyl sulfite, N-[[[4-[2-chloro-4-(trifluoromethyl)phenoxy]-2-fluorophenyl]amino]carbonyl]-2, 6-difluorobenzamide, N-nitro-1-[(6-chloro-3-pyridinyl) methyl] -2 -imidazolidineimine, N-cyano-3-[(6-chloro-3-pyridinyl)methyl]thiazolidine-2-imine, 1-(2-chlorothiazol-5-yl)methyl-3-methyl-2-nitroguanidine, N-nitro-3-(2-chlorothiazol-5-ylmethyl)-5-methyl-3,4,5,6-tetrahydro-2H-1,3,5-oxadiazine-4-imine, 4-bromo-1-(ethoxymethyl)-5-(trifluoromethyl)-2-(4-chlorophenyl)-1H-pyrrol-3-carbonitrile, dimethyl (1-hydroxy-2,2,2-trichloroethyl) phosphonate, O,O-diethylO-(5-phenyl-3-isoxazolyl) thiophosphate,
(E)-2-(4-tert-butylphenyl)-2-cyano-1-(1,3,4-trimethyl-1H-pyrazol-5-yl)vinyl 2,2-dimethylpropanoate, and trans-5-(4-chlorophenyl)-N-cyclohexyl-4-methyl-2-oxothiazolidine-3-carboxamide.

(2) The mite control bait-preparation according to (1), containing a dry yeast as a bait.
(3) It is preferable that the mite control bait-preparation according to (1) be a dust formulation.
(4) It is preferable that the mite control bait-preparation according to (1) be a granular formulation.
(5) The mite control bait-preparation according to (1) is particularly efficacious on acarids.

(6) A method for controlling mites, including using a bait-preparation containing, as an active ingredient, at least one compound selected from the group consisting of

(E)-N1-[(6-chloro-3-pyridyl)methyl]-N2-cyano-N1-methylacetamidine, N,N'-[thiobis[(methylimino)carbonyloxy]]bis[ethaneimidethioic acid methyl ester], 2,2-dichloroethenyl dimethyl phosphate, 2-(p-tert-butylphenoxy)cyclohexyl-2-propynyl sulfite, N-[[[4-[2-chloro-4-(trifluoromethyl)phenoxy]-2-fluorophenyl]amino]carbonyl]-2, 6-difluorobenzamide, N-nitro-1-[(6-chloro-3-pyridinyl)methyl]-2-imidazolidineimine, N-cyano-3-[(6-chloro-3-pyridinyl)methyl]thiazolidine-2-imine, 1-(2-chlorothiazol-5-yl)methyl-3-methyl-2-nitroguanidine, N-nitro-3-(2-chlorothiazol-5-ylmethyl)-5-methyl-3,4,5,6-tetrahydro-2H-1,3,5-oxadiazine-4-imine, 4-bromo-1-(ethoxymethyl)-5-(trifluoromethyl)-2-(4-chlorophenyl)-1H-pyrrol-3-carbonitrile, dimethyl (1-hydroxy-2,2,2-trichloroethyl) phosphonate, O,O-diethyl O-(5-phenyl-3-isoxazolyl) thiophosphate,
(E)-2-(4-tert-butylphenyl)-2-cyano-1-(1,3,4-trimethyl-1H-pyrazol-5-yl)vinyl 2,2-dimethylpropanoate, and
trans-5-(4-chlorophenyl)-N-cyclohexyl-4-methyl-2-oxothiazolidine-3-carboxamide.

(7) It is preferable that the bait-preparation be used with a fish meal fertilizer in the method for controlling mites according to (6).

(8) The method for controlling mites according to (6) is particularly efficacious on acarids.

[Advantageous Effects of Invention]

The mite control bait-preparation according to the present invention suppresses propagating of mites in soil, thereby controlling mites. In addition, combination use of the mite control bait-preparation according to the present invention and a fish meal fertilizer works synergistically in strongly suppressing propagating of mites in soil, thereby effectively controlling mites. The mite control bait-preparation according to the present invention particularly exhibits effective control effects on acarids.

[Description of Embodiment]

The mite control bait-preparation according to the present invention contains, as an active ingredient, at least one compound selected from the group consisting of

(E)-N1-[(6-chloro-3-pyridyl)methyl]-N2-cyano-N1-methylacetamidine, N,N' -[thiobis[(methylimino)carbonyloxy]]bis [ethaneimidethioic acid methyl ester], 2,2-dichloroethenyl dimethyl phosphate, 2-(p-tert-butylphenoxy)cyclohexyl-2-propynyl sulfite, N-[[[4-[2-chloro-4-(trifluoromethyl)phenoxy]-2-fluorophenyl]amino]carbonyl]-2, 6-difluorobenzamide, N-nitro-1-[(6-chloro-3-pyridinyl)methyl]-2-imidazolidineimine, N-cyano-3-[(6-chloro-3-pyridinyl)methyl]thiazolidine-2-imine, 1-(2-chlorothiazol-5-yl)methyl-3-methyl-2-nitroguanidine, N-nitro-3-(2-chlorothiazol-5-ylmethyl)-5-methyl-3,4,5,6-tetrahydro-2H-1,3,5-oxadiazine-4-imine, 4-bromo-1-(ethoxymethyl)-5-(trifluoromethyl)-2-(4-chlorophenyl)-1H-pyrrol-3-carbonitrile, dimethyl (1-hydroxy-2,2,2-trichloroethyl) phosphonate, O,O-diethyl O-(5-phenyl-3-isoxazolyl) thiophosphate, (E)-2-(4-tert-butylphenyl)-2-cyano-1-(1,3,4-trimethyl-1H-pyrazol-5-yl)vinyl 2,2-dimethylpropanoate, and
trans-5-(4-chlorophenyl)-N-cyclohexyl-4-methyl-2-oxothiazolidine-3-carboxamide.

The compounds may be directly used as raw materials of active ingredients to prepare the mite control bait-preparation according to the present invention; or may be used by formulating into a dust formulation, a granular formulation, wettable powders, water dispersible granules, emulsions, aqueous solutions, microencapsules, a flowable formulation, or the like. The active ingredients may be used solely or in combination of at least two kinds thereof.

Examples of the bait available in the mite control bait-preparation according to the present invention include grains, sugars, oils, animal substances, dry yeasts, and the like. The baits may be used solely or in combination thereof.
Examples of the grains include wheat flour, corn starch, potato starch, and the like.
Examples of the sugars include granulated sugar, honey, maltose, sorbitol, fructose, trehalose, and the like.
Examples of the oils include butter, peanut oil, sesame oil, corn oil, castor oil, and the like.
Examples of the animal substances include krill powders, pupal powders, shrimp powders, egg yolk powders, and the like.
In addition, flavors of milk, onion, or the like, may be formulated in the mite control bait-preparation according to the present invention.

The mite control bait-preparation according to the present invention is not particularly limited in terms of a ratio of the active ingredient to the bait. The weight ratio of the active ingredient to the bait is preferably 1:0.001 to 1:1000, more preferably 1:0.01 to 1:100, and even more preferably 1:0.1 to 1:10.

The mite control bait-preparation according to the present invention may contain a binder, a gelatinizing agent, a liquid component, a dye, or the like, as needed.
Examples of the binder include nitro cellulose, carboxymethyl cellulose, hydroxypropyl cellulose, and the like.
Examples of the gelatinizing agent include gelatin, carrageenan, agar, gellan gum, and the like.
Examples of the liquid component include water, alcohol, and the like. Examples of the alcohol include ethyl alcohol, isopropyl alcohol, and the like.
Examples of the dye include blue No. 1, yellow No. 203, red No. 102, and the like.
The mite control bait-preparation according to the present invention may further contain an additive, such as a water-absorbing polymer, an antiseptic agent, a preservative agent, a synergist, an antioxidant, a miss-eating preventive agent, a surfactant, an antifoamer, an attractant, or the like, as needed.

The mite control bait-preparation may be formulated into a form of granules, powders, a dust formulation, tablets, a gel preparation, a jelly preparation, a sol preparation, an aqueous solution, or the like.
The mite control bait-preparation in the form of a gel preparation, a jelly preparation, a sol prepration, or the like, is obtained, for example, by adding an agar, purified water, or the like, to the active ingredient, the bait, and additives formulated as needed, stirring the mixture while heating to uniform the component concentration of the mixture, and returning the mixture to room temperature to solidify the mixture.
The mite control bait-preparation in the form of granules, powders, a dust formulation, or the like, is obtained, for example,

by: kneading the active ingredient, the bait, and additives formulated as needed, and then granulating the kneaded mixture using a conventional granulating machine; pouring the active ingredient, the bait, and the like, into water to obtain an aqueous solution, and then adding a water-absorbing polymer to swell the water-absorbing polymer by absorbing the entire aqueous solution; or other conventional methods.

The mite control bait-preparation according to the present invention may be applied directly as a bait-preparation, or, for example, impregnated in or adhered to unwoven cloth, sponge, absorbent cotton, paper or the like, for application. The bait-preparation according to the present invention, or the unwoven cloth, sponge, absorbent cotton, paper, or the like, having the impregnated or adhered bait-preparation, may be directly applied to control mites, or may be placed in a container such as a cup, a tray, or a bottle, to control mites. The container is not particularly limited, provided that: the container has a space which allows the mites to stay therein to ingest the bait-preparation; and the structure thereof promotes ingestion efficiencies. The container may have a structure which prevents the mites from getting out therefrom, once the mites enter the container.

The mite control bait-preparation according to the present invention may be used with a herbicide, a fungicide, an insecticide, a miticide, a plant growth regulator, fertilizer, or the like. Such a combined use may decrease the respective dosages and realize laborsaving. Among the fertilizer, fish fertilizer such as fish meal tends to suppress propagation of mites.

A combined use of the mite control bait-preparation according to the present invention and the fish meal fertilizer strongly suppresses propagation of mites in soil by synergistic interaction therebetween, thereby effectively controlling mites.

[Examples]

Next, the present invention is described in more detail, based on a series of examples. However, the present invention is in no way limited by these examples.

Example 1

1 part of acetamiprid water-soluble powder (MOSPILAN manufactured by NIPPON SODA CO., LTD.) and 3 parts of dry yeast (dry yeast EBIOS manufactured by Mitsubishi Tanabe Pharma Corporation) were mixed to obtain a mite control bait-preparation. The obtained mite control bait-preparation was used as a test preparation.

Example 2

1 part of BPPS wettable powder (OMITE manufactured by NIHON NOHYAKU CO., LTD.) and 3 parts of dry yeast (dry yeast EBIOS manufactured by Mitsubishi Tanabe Pharma Corporation) were mixed to obtain a mite control bait-preparation. The obtained mite control bait-preparation was used as a test preparation.

Example 3

THIODICARBBAIT (manufactured by NIPPON SODA CO., LTD.) was directly used as a mite-control test preparation.

Comparative Example 1 (control example)

Only dry yeast (dry yeast EBIOS manufactured by Mitsubishi Tanabe Pharma Corporation) was used as a test preparation.

Comparative Examples 2 to 11

1 part of active ingredients shown in Tables 1 and 2 and 3 parts of dry yeast (dry yeast EBIOS manufactured by Mitsubishi Tanabe Pharma Corporation) were mixed to obtain respective bait-preparations. The obtained bait-preparations were used as test preparations.

(Preparation of preparation sheet)

A paper double-stick tape with a width of 1 cm was attached in a row on a drawing paper having a regular hexagon shape with a side of 1.5 cm, and then a test preparation was adhered thereto. Hereinafter, the resultant is called a preparation sheet.

Test Example 1 (Simplified test using soil generating acarids (in-room))

Approximately 80 cc of soil contaminated with Tyrophagus similis was put into a plastic cylindrical container with a diameter of 6 cm and a height of 3.3 cm.
A preparation sheet was placed on the soil surface in the container so that the sheet surface to which the test preparation was adhered contacted the soil, and then the cover of the container was closed and the container was left still.
The preparation sheet was removed from the container 6 days later, and the viable acarids and the dead acarids in the preparation sheet were counted under a stereoscopic microscope. In addition, the soil in the container was put into a Tullgren apparatus, and the viable acarids remained in soil 24 hours later were counted under a stereoscopic microscope.
The mite mortality rate (%) and the mite survival rate (vs untreated example) were calculated assuming "(sum D of total acarids in soil) = (count A of viable acarids remaining in soil and extracted using the Tullgren apparatus) + (count B of viable acarids gathering in the sheet) + (count C of dead acarids gathering in the sheet)".
The test was repeated three times and performed twice. The results are shown in Table 1. The numerical values in the table were averaged values obtained by repeating the test three times.
Table 1

| | Bait-preparation | | Count of viable mites in soil A | Count of viable mites in sheet B | Count of dead mites in sheet C | Sum D =A+B+C | Mite mortality rate C/D | Mite survival rate (vs untreated example) (A+B)/ untreated D |
|---|---|---|---|---|---|---|---|---|
| | Active ingredient | Bait | | | | | | |
| Example 1 | Acetamiprid water-soluble powder | Dry yeast | 58.7 | 4.7 | 26.7 | 90.1 | 30% | 15% |
| Example 2 | BPPS wettable powder | Dry yeast | 107.7 | 10.3 | 1.3 | 119.3 | 1% | 28% |
| Example 3 | Thiodicarbbait | - | 140.0 | 10.0 | 2.7 | 152.7 | 2% | 35% |
| Comparative Example 1 | Untreated | Dry yeast | 151.0 | 274.7 | 0.0 | 425.7 | 0% | 100% |
| Comparative Example 2 | Isoxathion dust formulation | Dry yeast | 151.7 | 148.0 | 0.7 | 300.4 | 0% | 70% |
| Comparative Example 3 | Benfuracarb granular formulation | Dry yeast | 136.7 | 183.3 | 0.0 | 320.0 | 0% | 75% |
| Comparative Example 4 | Nereis toxin dust formulation | Dry yeast | 124.7 | 254.3 | 0.0 | 379.0 | 0% | 89% |
| Comparative Example 5 | Pymetrozine wettable powder | Dry yeast | 168.3 | 212.3 | 0.3 | 380.9 | 0% | 89% |
| Comparative Example 6 | Acrinathrin wettable powder | Dry yeast | 189.3 | 146.0 | 0.0 | 335.3 | 0% | 79% |
| Comparative Example 7 | Buprofezin dust formulation | Dry yeast | 175.0 | 105.0 | 0.0 | 280.0 | 0% | 66% |

(continued)

| | Bait-preparation | | Count of viable mites in soil A | Count of viable mites in sheet B | Count of dead mites in sheet C | Sum D =A+B+C | Mite mortality rate C/D | Mite survival rate (vs untreated example) (A+B)/ untreated D |
|---|---|---|---|---|---|---|---|---|
| | Active ingredient | Bait | | | | | | |
| Comparative Example 8 | Diazinon dust formulation | Dry yeast | 145.0 | 145.7 | 0.3 | 291.0 | 0% | 68% |
| Comparative Example 9 | Fipronil granular formulation | Dry yeast | 90.3 | 250.7 | 0.0 | 341.0 | 0% | 80% |
| Comparative Example 10 | Carbosulfan granular formulation | Dry yeast | 191.7 | 180.0 | 0.0 | 371.7 | 0% | 87% |

Test Example 2 (sheet method (miticide test, in-room))

A preparation sheet was placed in a Petri dish with a diameter of 3.5 cm and a height of 1.0 cm. 10 breeding adults of Tyrophagus similisagent were released on the preparation sheet using a fine-point brush. FUJITANGLE was applied using an ink brush on an inner border of a cover of the Petri dish to close the Petri dish with the cover for the purpose of preventing escape or invasion. The Petri dish was placed on a square plastic container with a length of 8 cm, a width of 12 cm, and a height of 8 cm (manufactured by TUPPERWARE CO., LTD., under a trademark of "TUPPERWARE"; and having a three air vents with a diameter of 0.7 mm), and then kept at a room temperature of 25°C or less. The sheet in the Petri dish was periodically observed using a stereoscopic microscope, and ova, larvae, and adults of the acarids were counted. The test was repeated three times and performed twice. The results are shown in Table 2.

Table 2

| | Bait-preparation | | Total counts of adults, laryae, and ova (average of total counts obtained bv repeating test three times) | | | |
|---|---|---|---|---|---|---|
| | Active ingredient | Bait | Before treatment | 6 days after treatment | 13 days after treatment | 20 days after treatment |
| Example 1 | Acetamiprid water-soluble powder | Dry yeast | 10.0 | 2.0 | 2.3 | 1.7 |
| Example 2 | BPPS wettable powder | Dry yeast | 10.0 | 0.0 | 0.0 | 0.7 |
| Example 3 | Thiodicarbbait | - | 10.0 | 3.3 | 13.7 | 4.0 |
| Comparative Example 1 | Untreated | Dry yeast | 10.0 | 3.3 | 29.0 | 57.7 |
| Comparative Example 3 | Benfuracarb granular formulation | Dry yeast | 10.0 | 1.3 | 9.7 | 10.7 |
| Comparative Example 11 | MEP dust formulation | Dry yeast | 10.0 | 3.0 | 17.7 | 27.7 |

It is apparent from Tables 1 and 2 that the use of the mite control bait-preparation containing, as an active

ingredient, (E)-N1-[(6-chloro-3-pyridyl)methyl]- N2-cyano-N1-methyl acetamidine, N,N'-[thiobis[(methylimino)carbonyloxy]] bis[ethaneimidethioic acid methyl ester], and/or 2-(p-tert-butylphenoxy)cyclohexyl- 2-propynyl sulfite significantly decreased the numbers of the adults, larvae, and ova, and significantly lowered the mite survival rate of the acarids in comparison with other chemical agents.

Comparative Example 12 [mite-spraying]

10 female adults of Tyrophagus similis were released on black drawing paper, and a chemical liquid of predetermined concentration shown in Table 3 was sprayed at 2 mg/$cm^2$ using a rotary spray tower. After being allowed to air dry, dry yeast powders were attached to the black drawing paper. The black drawing paper was placed in a 9 cm Petri dish. The Petri dish was kept at 20°C under perfectly dark conditions. The adults, nymphs, larvae, and ova were counted 7 days or 14 days later. The test was repeated twice. The results are shown in Table 3.

Example 4 [chemical liquid immersion of bait]

The followings were carried out in accordance with a method described in Kasuga and Amano, Japanese Society of Applied Entomology and Zoology (JSAEX), 46(2), 99-101 (2002). More specifically, a 4 cm square black drawing paper was immersed in a suspension composed of 90 g of water and 10 g of dry yeast powders. After being allowed to air dry, the black drawing paper was immersed in chemical liquid of the predetermined concentration shown in Table 3. After the chemical liquid was air-dried, the black drawing paper was placed in a 9 cm Petri dish. 10 female adults of Tyrophagus similis were released in the Petri dish. The Petri dish was kept at 20°C under perfectly dark conditions. The adults, nymphs, larvae, and ova were counted 7 days or 14 days later. The test was repeated twice. The results are shown in Table 3. It has been revealed that the formulation into a bait-preparation realizes significantly excellent effects, even when the active ingredient is the same.

Table 3

| | Dilution rate Active ingredient content | Comparative Example 12 | | Example 4 | |
|---|---|---|---|---|---|
| | | 7 days later Counts | 14 days later Counts | 7 days later Counts | 14 days later Counts |
| MOSPILAN SP | × 100 2000 ppm | 177.0 | 89.0 | 12.0 | 4.5 |
| MOSPILAN SP | ×500 400 ppm | 261.5 | 55.5 | 74.5 | 12.5 |
| PHOSVIT EC | ×1000 750 ppm | 174.0 | 61.5 | 6.5 | 1.0 |
| OMITE EC | ×1500 380 ppm | 137.0 | 49.0 | 39.0 | 5.0 |
| CASCADE EC | ×4000 25 ppm | 184.5 | 77.5 | 85.0 | 8.5 |
| Tap water | - | 203.0 | 116.0 | - | - |

Example 5

A 4 cm square black drawing paper was immersed in a suspension composed of 90 g of water and 10 g of dry yeast powders. After being allowed to air dry, the black drawing paper was immersed in chemical liquid of the predetermined concentration shown in Table 4. After the chemical liquid was air-dried, the black drawing paper was placed in a 9 cm Petri dish. 10 female adults of Tyrophagus similis were released in the Petri dish. The Petri dish was maintained at 20°C under perfectly dark conditions. The adults, nymphs, larvae, and ova were counted 7 days or 14 days later. The test was repeated three times. The results are shown in Table 4.

Table 4

| | Dilution rate Active ingredient content | Example 5 | |
|---|---|---|---|
| | | 7 days later Counts | 14 days later Counts |
| MOSPILAN SP | ×100 2000 ppm | 7.7 | 0.0 |
| ADMIRE WP | ×50 2000 ppm | 12.3 | 0.6 |
| BARIARD WG | ×150 2000 ppm | 22.3 | 2.0 |
| DANTOTSU SG | ×80 2000 ppm | 25.7 | 2.0 |
| ACTARA SG | ×50 2000 ppm | 30.0 | 3.0 |
| Tap water | - | 204.1 | 84.0 |

Example 6

A 4 cm square black drawing paper was immersed in a suspension composed of 90 g of water and 10 g of dry yeast powders. After being allowed to air dry, the black drawing paper was immersed in chemical liquid of the predetermined concentration shown in Table 5. After the chemical liquid was air-dried, the black drawing paper was placed in a 9 cm Petri dish. 8 female adults of Tyrophagus similis were released in the Petri dish. The Petri dish was kept at 20°C under perfectly dark conditions. The adults, nymphs, larvae, and ova were counted 7 days or 14 days later. The test was repeated twice. The results are shown in Table 5.

Table 5

| | Dilution rate Active ingredient content | Example 6 | |
|---|---|---|---|
| | | 7 days later Counts | 14 days later Counts |
| KOTETSUSC | ×4000 25 ppm | 65.0 | 0.0 |
| DIPTEREX EC | ×1000 500 ppm | 115.5 | 3.5 |
| KARPHOS EC | ×1000 500 ppm | 44.0 | 1.0 |
| STARMITE SC | ×2000 150 ppm | 87.5 | 5.0 |
| NISSORUN WP | ×2000 50 ppm | 116.0 | 14.0 |
| Tap water | - | 250.0 | 126.0 |

Test Example 7

A 4 cm square black drawing paper was immersed in a suspension composed of 90 g of water and 10 g of dry yeast powders. After being allowed to air dry, the black drawing paper was immersed in chemical liquid of the predetermined concentration shown in Table 6. After the chemical liquid was air-dried, the black drawing paper was placed in a 9 cm Petri dish. 8 female adults of Rhizoglyphus robini were released in the Petri dish. The Petri dish was kept at 25°C under perfectly dark conditions. The viable mites were counted 4 days later. The adults and nymphs were counted 12 days later. The test was repeated twice. The results are shown in Table 6.

Table 6

| | Dilution rate Active ingredient content | Example 7 | |
|---|---|---|---|
| | | 4 days later Counts | 12 days later Counts |
| MOSPILAN SP | ×100 2000 ppm | 1.5 | 1.0 |
| Tap water | - | 6.0 | 119.0 |

Example 8

5 parts by weight of acetamiprid water-soluble powders (manufactured by NIPPON SODA CO., LTD., under a trade name of "MOSPILAN 20% SP"), 94.5 parts by weight of dry yeast (manufactured by KOHJIN Co., Ltd.), and 0.5 parts by weight of carboxymethyl cellulose were mixed to obtain a granular bait-preparation N.

Example 9

5 parts by weight of acetamiprid water-soluble powders (manufactured by NIPPON SODA CO., LTD., under a trade name of "MOSPILAN 20% SP"), 94.5% by weight of dry yeast (manufactured by KOHJIN Co., Ltd.), and 0.5 parts by weight of carboxymethyl cellulose were mixed to obtain a powdered bait-preparation O.

Test Example 3 (in-room plastic cup test (release))

150 ml of sieved Kannami soil was put in a 200 ml plastic cup, and 0.6 g of oil cake powders were mixed therewith. The Kannami soil contains moisture in an amount which does not allow to collapse when lightly gripped by the hand. Then, a chemical agent of the predetermined concentration shown in Table 7 was mixed, and 20 female adults of Tyrophagus similis were released onto the soil. Immediately after the release, the acarids burrowed into the soil.
A cover was placed over the cup. The covered cup was placed at 20°C under perfectly dark conditions. The moisture in the cup was maintained during the test term and the soil surface got moldy when observed 14 days later.
The acarids were captured on the soil-surface using a Kasuga-type trap containing a filter paper and dry yeast, as described in Kasuga et al., (2005) Appl. Entomol. and Zool. 40 (2) : 303-308, and the captured acarids were counted 14 days or 21 days later. The results are shown in Table7.
Table 7

| | | Formulation form | Treatment Amount | Kasuga-type trap 14 days later Counts | Kasuga-type trap 21 days later Counts |
|---|---|---|---|---|---|
| Example | Bait-preparation N | Granular formulation | 0.035 g (equivalent to 12 kg / 10 a) | 4.7 | 72.3 |
| | Bait-preparation O | Dust formulation | 0.036 g (equivalent to 12kg/10a) | 6.7 | 94.7 |
| Comparative Example | MOSPILANONE G | Granular formulation | 0.03 6 g (equivalent to 12kg/10a) | 17.3 | 202.3 |
| | MOSPILAN G | Granular formulation | 0.018 g (equivalent to 6kg/10a) | 19.0 | 119.7 |
| | Untreated | - | | 18.0 | 205.7 |

Test Example 4 (pot test using spinach in a greenhouse)

Look-out traps were provided in a house in which Tyrophagus similis (Tyrophagus similis) were left, and the soil was collected around the place in which the acarids were captured. The soil generating acarids were put in 6 gou pots. Chemical agents of the predetermined concentration shown in Table 8 were mixed with the soil. The next day, 6 grains of spinach seeds were sowed on each pots, and thinned out to 3 strains at the seed leaf stage. Spraying was carried out twice at the 2-leaf stage and the 4-leaf stage, in spray-treatment areas.
Each pots were kept in the house, and damage degrees of each spinach strains and the number of acarids parasitizing aerial parts thereof were investigated at the 8-leaf stage. The results are shown in Table 8.
$$\text{Damage degree} = (\text{the number of strains at damage state D} \times 5 + \text{the number of strains at damage state C} \times 3 + \text{the number of strains at damage state B} \times 0.5 + \text{the number of strains at damage state A} \times 0) \times 100 / \text{the number of investigated strains} \times 5$$

Damage state A: There was no damage.

Damage state B: There were at most 2 deformed leaves.

Damage state C: There were 3 - 4 deformed leaves, but no brown discoloration in the middle.

Damage state D: There was brown discoloration in the middle.

Table 8

| | | Formulation form | Treatment Amount | Damage degree |
|---|---|---|---|---|
| Example | Bait-preparation N | Granular formulation | 0.31 g (equivalent to 12kg/10a) | 20.0 |
| | Bait-preparation O | Dust formulation | 0.31 g (equivalent to 12kg/10a) | 40.0 |
| Comparative Example | MOSPILANONE G | Granular formulation | 0.31 g (equivalent to 12kg/10a) | 57.8 |
| | MOSPILAN G | Granular formulation | 0.16 g (equivalent to 6 kg /10 a) | 50.0 |
| | NEMAMOL G30 | Granular formulation | 0.78 g (equivalent to 30 kg/ 10 a) | 41.1 |
| | Untreated | - | | 68.9 |

The above-described results show the followings. The bait-preparation according to the present invention can effectively control mites such as acarids. The active ingredients, used in the bait-preparations according to the present invention, exhibited low control effects on mites, when the active ingredients were made into an agent in a form of an emulsion, wettable powders, granules, or the like (Table 3).
The bait-preparation according to the present invention particularly exhibited excellent mite-control effects, when the bait-preparation is a granular formulation (Table 7 and Table 8).

[Industrial Applicability]

The use of the mite control bait-preparation according to the present invention can suppress propagation of mites in soil, thereby controlling mites. In addition, the combined use of the mite control bait-preparation according to the present invention and the fish meal fertilizer can strongly suppress propagation of mites in soil by synergistic interaction therebetween, thereby effectively controlling mites. The mite control bait-preparation according to the present invention particularly exhibits effective control effects on acarids.

## Claims

1. A mite control bait-preparation comprising, as an active ingredient, at least one compound selected from the group consisting of

   (E)-N1-[(6-chloro-3-pyridyl)methyl]-N2-cyano-N1-methylacetamidine, N,N' -[thiobis[(methylimino)carbonyloxy]]bis[ethaneimidethioic acid methyl ester], 2,2-dichloroethenyl dimethyl phosphate, 2-(p-tert-butylphenoxy) cyclohexyl-2-propynyl sulfite, N-[[[4-[2-chloro-4-(trifluoromethyl)phenoxy]-2-fluorophenyl]amino]carbonyl]-2, 6-difluorobenzamide, N-nitro-1-[(6-chloro-3-pyridinyl)methyl]-2-imidazolidineimine, N-cyano-3-[(6-chloro-3-pyridinyl)methyl]thiazolidine-2-imine, 1-(2-chlorothiazol-5-yl)methyl-3-methyl-2-nitroguanidine, N-nitro-3-(2-chlorothiazol-5-ylmethyl)-5-methyl-3,4,5,6-tetrahydro-2H-1,3,5-oxadiazine-4-imine, 4-bromo-1-(ethoxymethyl)-5-(trifluoromethyl)-2-(4-chlorophenyl)-1H-pyrrol-3-carbonitrile, dimethyl (1-hydroxy-2,2,2-trichloroethyl) phosphonate, O,O-diethyl O-(5-phenyl-3-isoxazolyl) thiophosphate,
   (E)-2-(4-tert-butylphenyl)-2-cyano-1-(1,3,4-trimethyl-1H-pyrazol-5-yl)vinyl 2,2-dimethylpropanoate, and trans-5-(4-chlorophenyl)-N-cyclohexyl-4-methyl-2-oxothiazolidine-3-carboxamide.

2. The mite control bait-preparation according to Claim 1, comprising a dry yeast as a bait.

3. The mite control bait-preparation according to Claim 1, being a dust formulation.

4. The mite control bait-preparation according to Claim 1, being a granular formulation.

5. The mite control bait-preparation according to any one of Claims 1 to 3, wherein the mites to be controlled are acarids.

6. A method for controlling mites, comprising: using a bait-preparation comprising, as an active ingredient, at least one compound selected from the group consisting of

   (E)-N1-[(6-chloro-3-pyridyl)methyl]-N2-cyano-N1-methylacetamidine, N,N' -[thiobis[(methylimino)carbonyloxy]]bis[ethaneimidethioic acid methyl ester], 2,2-dichloroethenyl dimethyl phosphate, 2-(p-tert-butylphenoxy) cyclohexyl-2-propynyl sulfite, N-[[[4-[2-chloro-4-(trifluoromethyl)phenoxy]-2-fluorophenyl]amino]carbonyl]-2, 6-difluorobenzamide, N-nitro-1-[(6-chloro-3-pyridinyl)methyl]-2-imidazolidineimine, N-cyano-3-[(6-chloro-3-pyridinyl)methyl]thiazolidine-2-imine, 1-(2-chlorothiazol-5-yl)methyl-3-methyl-2-nitroguanidine, N-nitro-3-(2-chlorothiazol-5-ylmethyl)-5-methyl-3,4,5,6-tetrahydro-2H-1,3,5-oxadiazine-4-imine, 4-bromo-1-(ethoxymethyl)-5-(trifluoromethyl)-2-(4-chlorophenyl)-1H-pyrrol-3-carbonitrile, dimethyl (1-hydroxy-2,2,2-trichloroethyl) phosphonate, O,O-diethyl O-(5-phenyl-3-isoxazolyl) thiophosphate,
   (E)-2-(4-tert-butylphenyl)-2-cyano-1-(1,3,4-trimethyl-1H-pyrazol-5-yl)vinyl 2,2-dimethylpropanoate, and trans-5-(4-chlorophenyl)-N-cyclohexyl-4-methyl-2-oxothiazolidine-3-carboxamide.

7. The method for controlling mites according to Claim 6, wherein the bait-preparation is used with a fish meal fertilizer.

8. The method for controlling mites according to Claim 6, wherein the mites to be controlled are acarids.

**INTERNATIONAL SEARCH REPORT**

International application No.
PCT/JP2010/068325

A. CLASSIFICATION OF SUBJECT MATTER
*A01N47/40*(2006.01)i, *A01P7/02*(2006.01)i

According to International Patent Classification (IPC) or to both national classification and IPC

B. FIELDS SEARCHED

Minimum documentation searched (classification system followed by classification symbols)
A01N47/40, A01P7/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2003-155203 A (Sumitomo Chemical Co., Ltd.), 27 May 2003 (27.05.2003), claims; paragraph [0017]; examples (particularly, pharmaceutical preparation example 5) & WO 2003/026425 A1 | 1-8 |
| X | JP 2000-053505 A (Sumitomo Chemical Co., Ltd.), 22 February 2000 (22.02.2000), claims; paragraph [0004]; examples (Family: none) | 1-8 |
| A | JP 2000-095621 A (Sumitomo Chemical Co., Ltd.), 04 April 2000 (04.04.2000), claims; paragraphs [0004], [0008]; examples & WO 2000/004776 A1 & AU 4396499 A | 1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 January, 2011 (04.01.11) | 11 January, 2011 (11.01.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2010/068325

C (Continuation). DOCUMENTS CONSIDERED TO BE RELEVANT

| Category* | Citation of document, with indication, where appropriate, of the relevant passages | Relevant to claim No. |
|---|---|---|
| A | JP 63-230609 A (Fumakilla Co., Ltd.), 27 September 1988 (27.09.1988), claims; examples (particularly, example 5) (Family: none) | 1-8 |
| A | JP 7-138112 A (Dainihon Jochugiku Co., Ltd.), 30 May 1995 (30.05.1995), claims; examples & JP 11-500101 A & US 5854288 A & EP 729301 A1 & WO 1995/013703 A1 & CA 2176596 A & MX 9408958 A | 1-8 |

Form PCT/ISA/210 (continuation of second sheet) (July 2009)

**INTERNATIONAL SEARCH REPORT**

International application No.
PCT/JP2010/068325

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet.

1. ☐ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.:
Parts of 1-8 (active component (1))

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

INTERNATIONAL SEARCH REPORT

International application No.
PCT/JP2010/068325

Continuation of Box No.III of continuation of first sheet(2)

As disclosed in documents D1-D4 shown below, a tick control bait is known to persons skilled in the art.

Therefore, a tick control bait cannot be regarded as a special technical feature (i.e., a technical feature that makes a contribution over the prior art), and there is no technical relationship involving any special technical feature among the inventions described in claims 1-8.

Consequently, it is considered that claims 1-8 of the present international application include 14 inventions having different special technical features from one another, as stated below.

(1) A tick control bait comprising, as an active ingredient, (E)-N1-[(6-chloro-3-pyridyl)methyl]-N2-cyano-N1-methyl- acetamidine, and a tick control method using the bait.

(2) A tick control bait comprising, as an active ingredient, N,N'-[thiobis[(methylimino)carbonyloxy]]bis[ethanimidethioic acid methyl ester], and a tick control method using the bait.

(3) A tick control bait comprising, as an active ingredient, dimethyl 2,2-dichloroethenyl phosphate, and a tick control method using the bait.

(4) A tick control bait comprising, as an active ingredient, 2-(p-tert-butylphenoxy)cyclohexyl 2-propenyl sulfite, and a tick control method using the bait.

(5) A tick control bait comprising, as an active ingredient, N-[[[4-[2-chloro-4-(trifluoromethyl)phenoxy]-2-fluorophenyl]-amino]carbonyl]-2,6-difluorobenzamide, and a tick control method using the bait.

(6) A tick control bait comprising, as an active ingredient, N-nitro-1-[(6-chloro-3-pyridinyl)methyl]-2-imidazolidinimine, and a tick control method using the bait.

(7) A tick control bait comprising, as an active ingredient, N-cyano-3-[(6-chloro-3-pyridinyl)methyl]thiazolidine-2-imine, and a tick control method using the bait.

(8) A tick control bait comprising, as an active ingredient, 1-(2-chlorothiazol-5-yl)methyl-3-methyl-2-nitroguanidine, and a tick control method using the bait.

(9) A tick control bait comprising, as an active ingredient, N-nitro-3-(2-chlorothiazol-5-ylmethyl)-5-methyl-3,4,5,6-tetrahydro-2H-1,3,5-oxadiazine-4-imine, and a tick control method using the bait.

(10) A tick control bait comprising, as an active ingredient, 4-bromo-1-(ethoxymethyl)-5-(trifluoromethyl)-2-(4-chlorophenyl)-1H-pyrrole-3-carbonitrile, and a tick control method using the bait.

(continued to next sheet)

**INTERNATIONAL SEARCH REPORT**

International application No.
PCT/JP2010/068325

(11) A tick control bait comprising, as an active ingredient, dimethyl (1-hydroxy-2,2,2-trichloroethyl)phosphonate, and a tick control method using the bait.

(12) A tick control bait comprising, as an active ingredient, O,O-diethyl O-(5-phenyl-3-isooxazolyl)thiophosphate, and a tick control method using the bait.

(13) A tick control bait comprising, as an active ingredient, (E)-2-(4-tert-butylphenyl)-2-cyano-1-(1,3,4-trimethyl-1H-pyrazol-5-yl)vinyl 2,2-dimethylpropanoate, and a tick control method using the bait.

(14) A tick control bait comprising, as an active ingredient, trans-5-(4-chlorophenyl)-N-cyclohexyl-4-methyl-2-oxothiazolidine-3-carboxamide, and a tick control method using the bait.

D1: JP 2003-155203 A (Sumitomo Chemical Co., Ltd.) 27 May 2003 (27.05.2003) (examples (particularly preparation example 5))
D2: JP 2000-053505 A (Sumitomo Chemical Co., Ltd.) 22 February 2000 (22.02.2000) (the use of a neonicotinoid compound for the control of ticks is known to persons skilled in the art; see, for example, JP 2000-095621 A)
D3: JP 63-230609 A (Fumakilla Co., Ltd.) 27 September 1988 (27.09.1988) (examples (particularly example 5))
D4: JP 7-138112 A (Dainihon Jochugiku Co., Ltd.) 30 May 1995 (30.05.1995) (examples)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009242399 A
- JP 2000053505 A


### Non-patent literature cited in the description


- **KASUGA ; AMANO.** *Japanese Society of Applied Entomology and Zoology (JSAEX,* 2002, vol. 46 (2), 99-101
- **KASUGA et al.** *Appl. Entomol. and Zool,* 2005, vol. 40 (2), 303-308